# EUROPÄISCHE PATENTSCHRIFT

(11) **EP 3 887 116 B1**
(45) Veröffentlichungstag und Bekanntmachung des Hinweises auf die Patenterteilung: **12.04.2023**
(21) Anmeldenummer: 19809781.8
(22) Anmeldetag: 25.11.2019
(51) Int. Cl.: B29C 33/30, F03D 1/06, B29L 31/08

(54) **ROTORBLATTFORM UND VERFAHREN ZUR HERSTELLUNG EINES ROTORBLATTES FÜR EINE WINDENERGIEANLAGE**
ROTOR BLADE MOLD AND METHOD FOR PRODUCING A ROTOR BLADE FOR A WIND TURBINE
MOULE DE PALE DE ROTOR ET PROCÉDÉ DE FABRICATION D'UNE PALE DE ROTOR POUR UNE ÉOLIENNE

(30) Priorität: 28.11.2018 DE 102018009331
(43) Veröffentlichungstag der Anmeldung: 06.10.2021
(73) Patentinhaber: Siemens Gamesa Renewable Energy Service GmbH, 20097 Hamburg (DE)
(72) Erfinder: EYB, Enno, 24116 Kiel (DE); MESTER, Hendrik, 24118 Kiel (DE)
(74) Vertreter: Schlotter, Alexander Carolus Paul
(86) Internationale Anmeldenummer: PCT/EP2019/082401
(87) Internationale Veröffentlichungsnummer: WO 2020/109221

(56) Entgegenhaltungen:
- DE-A1-102014 001 445
- DE-C1- 19 833 869
- US-A1- 2012 211 637
- US-A1- 2017 274 563

## Beschreibung

Die Erfindung betrifft eine Rotorblattform und ein Verfahren zur Herstellung eines Rotorblattes für eine Windenergieanlage.

Rotorblätter von Windenergieanlagen weisen abhängig von den jeweiligen Standortbedingungen unterschiedliche Längen auf, um die Rotorfläche der Anlage an den jeweiligen Standort anzupassen. In der Regel wird bei der Herstellung von Rotorblättern für jede gewünschte Rotorblattlänge ein eigenes Formwerkzeug, d.h. eine eigene Rotorblattform, bereitgestellt. Die Herstellung unterschiedlicher Rotorblattformen erfordert lange Vorlaufzeiten und ist teuer. Ferner ist die Vorhaltung und Lagerung unterschiedlich langer Rotorblattformen mit einem erhöhten Platzbedarf und entsprechenden Kosten verbunden.

DE102014001445 A1 offenbart eine Vorrichtung zur Herstellung von Rotorblattschalen unterschiedlicher Größe und Form in Negativformen. Durch Verwendung verschiedener Formabschnitte, die zusammengesetzt die gewünschte Negativform ergeben, lassen sich in einem ausreichend großen Grundkörper die verschiedenen Rotorblatthalbschalen herstellen. In US2017274563 A1 werden ein System und ein Verfahren zur Herstellung von Windturbinenblattformen beschrieben. Das Verfahren umfasst die Unterteilung einer Blattformgeometrie in separate geometrische Scheiben oder Segmente. Die separaten Scheiben können dann zur Steuerung des Schneidens von Rohlingelementen verwendet werden, um separate Schnittflächen zu bilden. Die Schnittflächen werden zur Bildung einer konsolidierten Windturbinenformoberfläche verwendet.

Es ist eine Aufgabe der Erfindung, eine Rotorblattform und ein Verfahren zur verbesserten, insbesondere einfacheren und/oder kostengünstigeren, Herstellung eines Rotorblattes für eine Windenergieanlage.

Diese Aufgabe wird durch eine Rotorblattform und ein Verfahren zur Herstellung eines Rotorblattes gemäß den unabhängigen Ansprüchen sowie eine Windenergieanlage mit solchen Rotorblättern gelöst.

Eine erfindungsgemäße Rotorblattform zur Herstellung eines Rotorblattes, welches eine Blattwurzel und eine Blattspitze aufweist und sich in einer Längsrichtung von der Blattwurzel zur Blattspitze erstreckt, für eine Windenergieanlage weist auf: ein erstes Rotorblattformsegment, welches zur Herstellung eines die Blattwurzel aufweisenden Abschnitts des Rotorblattes eingerichtet ist, ein zweites Rotorblattformsegment, welches zur Herstellung eines die Blattspitze aufweisenden Abschnitts des Rotorblattes eingerichtet ist, und mindestens ein drittes Rotorblattformsegment, welches dazu eingerichtet ist, zwischen dem ersten und zweiten Rotorblattformsegment in die Rotorblattform integriert zu werden und/oder zwischen dem ersten und zweiten Rotorblattformsegment aus der Rotorblattform entfernt zu werden und dabei die Rotorblattform in Längsrichtung zu verlängern oder zu verkürzen.

Ein erfindungsgemäßes Verfahren zur Herstellung eines Rotorblattes, welches eine Blattwurzel und eine Blattspitze aufweist und sich in einer Längsrichtung von der Blattwurzel zur Blattspitze erstreckt, für eine Windenergieanlage weist folgende Schritte auf: Bereitstellen einer Rotorblattform, die ein erstes Rotorblattformsegment, welches zur Herstellung eines die Blattwurzel aufweisenden Abschnitts des Rotorblattes eingerichtet ist, und ein zweites Rotorblattformsegment, welches zur Herstellung eines die Blattspitze aufweisenden Abschnitts des Rotorblattes eingerichtet ist, aufweist, und Integrieren mindestens eines dritten Rotorblattformsegments in die Rotorblattform zwischen dem ersten und zweiten Rotorblattformsegment und/oder Entfernen mindestens eines zwischen dem ersten und zweiten Rotorblattsegment liegenden dritten Rotorblattformsegments aus der Rotorblattform, so dass die Rotorblattform in Längsrichtung verlängert oder verkürzt wird.

Eine Windenergieanlage die mit der vorliegenden Erfindung hergestellt werden kann weist mindestens ein Rotorblatt auf, welches unter Verwendung einer erfindungsgemäßen Rotorblattform und/oder mit einem erfindungsgemäßen Verfahren hergestellt wurde.

Bevorzugte Aspekte der Erfindung basieren auf dem Ansatz, für die Herstellung eines Rotorblattes eine Rotorblattform, die im Zusammenhang mit der vorliegenden Erfindung auch als Formwerkzeug bezeichnet wird, bereitzustellen bzw. zu verwenden, welche abhängig von der gewünschten Länge des Rotorblattes aus unterschiedlich vielen modular gestalteten Segmenten zusammensetzbar ist bzw. zusammengesetzt wird. Die Rotorblattform ist dabei so ausgestaltet, dass in einen bzw. aus einem zwischen zwei äußeren Rotorblattformsegmenten, insbesondere zwischen einem blattwurzelseitigen und blattspitzenseitigen Rotorblattformsegment, liegenden Abschnitt der Rotorblattform mindestens ein weiteres Rotorblattformsegment integrierbar und/oder entfernbar und/oder gegen ein anderes Rotorblattformsegment austauschbar ist, um die Länge der zusammengesetzten Rotorblattform in Längsrichtung zu vergrößern bzw. zu verringern. Die beiden äußeren Rotorblattformsegmente sind dabei so ausgestaltet, dass in ihnen die Abschnitte des Rotorblattes hergestellt werden, welche die Blattwurzel bzw. die Blattspitze enthalten. Die beiden äußeren Rotorblattformsegmente werden daher auch als Blattwurzelsegment bzw. Blattspitzensegment und das integrierbare, entfernbare bzw. austauschbare weitere Rotorblattformsegment auch als Zwischensegment oder Zwischenstück bezeichnet.

Aufgrund der modular ausgestalteten Segmente ist auf einfache Weise eine Längenanpassung der Rotorblattform möglich. Im Bedarfsfall kann die Längenanpassung der Rotorblattform sogar sehr fein abgestuft erfolgen, da die Formen der integrierbaren, entfernbaren bzw. austauschbaren Zwischensegmente - im Gegensatz zu den aufwändigeren Formen bei den Blattwurzel- und Blattspitzensegmenten - vergleichsweise einfach zu realisieren sind. Bei der Wahl von mehreren Zwischensegmenten kann ferner die Geometrie der Rotorblattform noch besser der optimalen Geometrie für jede Blattlänge angenähert werden und auch der Spannweitenbereich weiter vergrößert werden.

Insgesamt ermöglicht die Erfindung somit eine verbesserte, insbesondere einfachere und/oder kostengünstigere, Herstellung von Rotorblättern für Windenergieanlagen.

Vorzugsweise werden erfindungsgemäße Rotorblattformen bzw. Formwerkzeuge zur Herstellung von aus jeweils zwei Halbschalen zusammengesetzten Rotorblättern eingesetzt, wobei vorzugsweise für jede der beiden Halbschalen eine erfindungsgemäße Rotorblattform in der entsprechenden Länge verwendet wird.

Die Halbschalen werden vorzugsweise aus einem Faserverbundwerkstoff hergestellt, indem mehrere Lagen dünner, insbesondere 1 bis 2 mm dünner, textiler Gebilde, wie etwa Gewebe, Gewirke, Gelege oder Vliese, in die Rotorblattform eingelegt und anschließend mittels einer Harzinfusionstechnik mit Harz versehen werden. Alternativ können vorimprägnierte Faserlagen (sog. Prepregs) verwendet werden, bei welchen die Faserlagen bereits in Harz, insbesondere eine Lage aus Harz, eingebettet sind und nach Erwärmung und ggf. Beaufschlagung mit Unterdruck eine stoffschlüssige Verbindung eingehen. In beiden Fällen nimmt der Faserverbundwerkstoff eine Oberfläche gemäß der Rotorblattform an.

Vorzugsweise ist das mindestens eine dritte Rotorblattformsegment in einem Bereich oder Abschnitt der Rotorblattform vorgesehen, welcher zwischen etwa 20 % und 80 % einer Blattformlänge der Rotorblattform in Längsrichtung liegt. Das erste und zweite Rotorblattformsegment, das für die Herstellung der Blattwurzel bzw. Blattspitze ausgebildet bzw. entsprechen geformt ist, befindet sich entsprechend vorzugsweise in einem Bereich oder Abschnitt der Rotorblattform, welcher unterhalb von etwa 20 % bzw. oberhalb von etwa 80 % der Blattformlänge der Rotorblattform in Längsrichtung liegt. Um eine Herstellung unterschiedlich langer Rotorblätter zu ermöglichen, brauchen dadurch nicht etwa unterschiedlich lange Blattspitzen- und/oder Blattwurzelsegmente gelagert oder vorgehalten zu werden, deren Herstellung aufgrund der komplexeren Rotorblattform im Bereich der Blattspitze bzw. Blattwurzel deutlich aufwändiger und damit teurer ist, als dies bei den einfacher herzustellenden Zwischensegmenten der Fall ist.

Alternativ oder zusätzlich weist das mindestens eine dritte Rotorblattformsegment in Längsrichtung eine Segmentlänge auf, welche nicht größer ist als 20 % der Blattformlänge der Rotorblattform in Längsrichtung. Der in dem mindestens einen Zwischensegment enthaltene Abschnitt der Form des Rotorblattes ist dadurch besonders einfach zu realisieren. Ferner ist dadurch eine Längenanpassung in relativ kleinen Schritten möglich.

Ferner ist bevorzugt, dass das mindestens eine dritte Rotorblattformsegment in einem Bereich der Rotorblattform vorgesehen ist, welcher zur Herstellung eines im Wesentlichen zylindrischen Bereichs oder Abschnitts der Blattwurzel des Rotorblattes eingerichtet ist. Vorzugsweise ist hierbei das mindestens eine dritte Rotorblattformsegment in einem Bereich oder Abschnitt der Rotorblattform vorgesehen, welcher unterhalb von 20 %, insbesondere unterhalb von 10 %, der Blattformlänge der Rotorblattform in Längsrichtung liegt. Entsprechend geformte dritte Rotorblattformsegmente und deren Integration, Entfernung bzw. Austausch lassen sich für diesen Bereich besonders einfach realisieren.

Erfindungsgemäß weist das mindestens eine dritte Rotorblattformsegment eine zur Längsrichtung im Wesentlichen senkrecht verlaufende Querschnittsfläche auf, deren Form und/oder Größe in Längsrichtung, d.h. bei unterschiedlichen Positionen der Querschnittfläche entlang der Längsrichtung, im Wesentlichen konstant ist. In diesem Fall ist das mindestens eine Zwischensegment vorzugsweise als Zylinder im mathematischen Sinne ausgebildet, bei dem es sich im Allgemeinen nicht um einen Kreiszylinder handelt, sondern vorzugsweise vielmehr um einen Zylinder mit einer nicht kreisrunden Querschnittsfläche. Dadurch wird auf einfache Weise die Integrierbarkeit, Entfernbarkeit bzw. Austauschbarkeit der Zwischensegmente realisiert.

Vorzugsweise weist das mindestens eine dritte Rotorblattformsegment jeweils eine obere Grundfläche und eine untere Grundfläche auf, wobei die obere und untere Grundfläche bezüglich Form und/oder Größe der Endquerschnittsfläche des dem dritten Rotorblattformsegment jeweils zugewandten Endes des ersten bzw. zweiten Rotorblattformsegments entspricht. Die einander jeweils zugewandten Grund- und Endquerschnittflächen sind vorzugsweise kongruent (deckungsgleich). Beispielsweise ist die untere Grundfläche eines dritten Rotorblattformsegments deckungsgleich mit der der unteren Grundfläche zugewandten Endquerschnittsfläche des Blattwurzelsegments der Rotorblattform, und die obere Grundfläche des dritten Rotorblattformsegments ist deckungsgleich mit der der oberen Grundfläche zugewandten Endquerschnittsfläche des Blattspitzensegments der Rotorblattform. Hierdurch lässt sich die Integrierbarkeit, Entfernbarkeit bzw. Austauschbarkeit der dritten Rotorblattformsegmente auf besonders einfache und zuverlässige Weise realisieren.

Vorzugsweise weist das mindestens eine dritte Rotorblattformsegment einen Abschnitt einer Negativform der herzustellenden Rotorblattschale auf.

Es ist ferner bevorzugt, dass das mindestens eine dritte Rotorblattformsegment jeweils eine obere Grundfläche und eine untere Grundfläche aufweist, wobei die obere Grundfläche gegenüber der unteren Grundfläche um eine in Längsrichtung verlaufende Längsachse verdreht ist. Im Unterschied zu einem zylindrisch ausgestalteten Zwischensegment, bei welchem die die Grundflächen parallel verschoben sind, ist dieses vorliegend über seine Länge in sich verdreht bzw. tordiert, d.h. die Querschnittsfläche des Rotorblattformsegments ist in Längsrichtung verdreht. Das Rotorblattformsegment stellt in diesem Fall einen in Längsrichtung tordierten Zylinder dar. Dadurch kann eine je nach gewählter Blattlänge verbesserte Verteilung der Verwindung realisiert werden.

Es ist ferner bevorzugt, dass das mindestens eine dritte Rotorblattformsegment jeweils eine obere Grundfläche und eine untere Grundfläche aufweist, wobei die obere Grundfläche gegenüber der unteren Grundfläche um mindestens eine senkrecht zur Längsrichtung verlaufende Kippachse gekippt ist. Anders ausgedrückt, weist die Längsachse senkrecht zur Profiltiefe vorzugsweise eine Krümmung auf, so dass ein endlicher Winkel bzw. eine Verkippung zwischen den beiden Endquerschnitten, d.h. der oberen und unteren Grundfläche, erhalten wird. Durch solche Zwischensegmente kann eine sog. Vorbiegung des herzustellenden Rotorblattes realisiert werden. Vorzugsweise ist in diesem Fall zumindest ein Teil der Zwischensegmente und/oder mindestens eines der äußeren Segmente (d.h. das Blattwurzel- und/oder Blattspitzensegment, insbesondere das sog. Tipsegment (d.h. das Blattspitzensegment) auch um die senkrecht zur Längsrichtung verlaufende Profilsehne im Bereich der Verbindungsstelle einstellbar. Diese Einstellungen lassen sich z.B. über eine individuelle Höheneinstellung an jeder Ecke des jeweiligen Zwischensegments bzw. äußeren Segmentes erreichen.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel einer Rotorblattform in einer perspektivischen Explosionsdarstellung;
- Fig. 2: ein Beispiel eines mit einer Rotorblattform hergestellten Rotorblattes in Frontansicht; und
- Fig. 3: a) bis c) drei Beispiele von Zwischensegmenten in einer perspektivischen Ansicht.

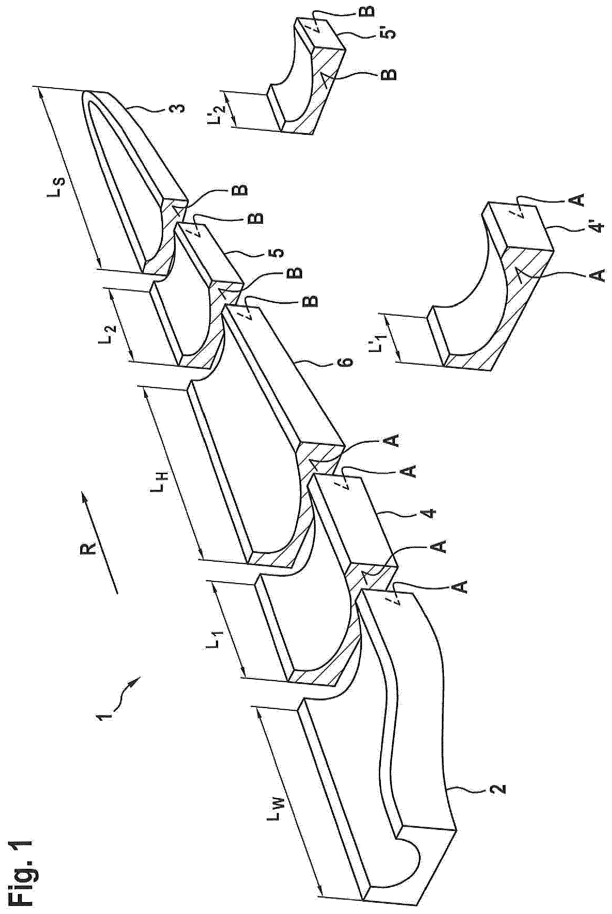

Figur 1 zeigt ein Beispiel einer als Formwerkzeug ausgebildeten Rotorblattform 1 zur Herstellung einer Rotorblattschale in einer perspektivischen Explosionsdarstellung. Die Rotorblattform 1 weist ein erstes Rotorblattformsegment 2 zur Herstellung der Blattwurzel des Rotorblattes und ein zweites Rotorblattsegment 3 zur Herstellung der Blattspitze des Rotorblattes auf.

Der zwischen dem ersten und zweiten Rotorblattsegment 2, 3 liegende Teil der Rotorblattform 1 wird durch, in diesem Fall, zwei dritte Rotorblattformsegmente 4, 5 und einem zwischen den dritten Rotorblattformsegmenten 4, 5 liegenden Hauptsegment 6 gebildet, wobei die beiden dritten Rotorblattformsegmente 4, 5 so ausgestaltet sind, dass diese mit dem ersten Rotorblattformsegment 2 und dem Hauptsegment 6 bzw. mit dem Hauptsegment 6 und dem zweiten Rotorblattformsegment 3 gekoppelt oder verbunden werden können.

Alternativ oder zusätzlich sind die beiden dritten Rotorblattformsegmente 4, 5 so ausgestaltet, dass diese lösbar mit dem ersten und/oder zweiten Rotorblattformsegment 2 bzw. 3 und/oder Hauptsegment 6 gekoppelt oder verbunden sind bzw. werden können, so dass diese bei Bedarf aus der aus den Segmenten 2 bis 6 gebildeten Rotorblattform 1 entfernt werden können.

Nach dem Entfernen der dritten Rotorblattformsegmente 4, 5 können diese durch weitere dritte Rotorblattformsegmente 4' bzw. 5' ersetzt werden, die - wie die Rotorblattformsegmente 4, 5 - so ausgestaltet sind, dass diese mit dem ersten Rotorblattformsegment 2 und dem Hauptsegment 6 bzw. mit dem Hauptsegment 6 und dem zweiten Rotorblattformsegment 3 gekoppelt oder verbunden werden können. Bei dieser Variante werden die dritten Rotorblattformsegmente 4, 5 also gegen weitere dritte Rotorblattformsegmente 4`, 5` ausgetauscht.

Alternativ kann nach dem Entfernen der dritten Rotorblattformsegmente 4, 5 aber auch vorgesehen sein, dass das erste und zweite Rotorblattformsegment 2, 3 direkt mit dem Hauptsegment 6 verbunden werden. Das erste und zweite Rotorblattformsegment 2, 3 sind dabei vorzugsweise so ausgestaltet, dass diese direkt, d.h. ohne weiteres Zwischensegment mit dem Hauptsegment 6, insbesondere lösbar, gekoppelt oder verbunden werden können.

Im vorliegenden Beispiel haben die beiden dritten Rotorblattformsegmente 4, 5 in Längsrichtung R der Rotorblattform 1 jeweils eine erste Segmentlänge L₁ bzw. L₂ und die beiden weiteren dritten Rotorblattformsegmente 4', 5`jeweils eine zweite Segmentlänge L'₁ bzw. L'₂, wobei die ersten Segmentlängen L₁, L₂ größer sind als die zweiten Segmentlängen L'₁, L'₂.

Werden bei der aus den Segmenten 2 bis 6 gebildeten Rotorblattform 1, wie oben beschrieben, die dritten Rotorblattformsegmente 4 und 5 gegen die weiteren dritten Rotorblattformsegmente 4' und 5' ausgetauscht, so wird die Gesamtlänge der Rotorblattform 1 um eine Längendifferenz □L = (L₁ - L'₁) + (L₂ - L'₂) verkürzt.

Vorzugsweise beträgt die Länge L_{W} des ersten Rotorblattformsegments 2 und/oder die Länge L_{S} des zweiten Rotorblattformsegments 3 jeweils höchstens 20 % der Gesamtlänge L der Rotorblattform 1. Im vorliegenden Beispiel errechnet sich die Gesamtlänge L (mit den dritten Rotorblattformsegmenten 4 und 5) bzw. L' (mit den weiteren dritten Rotorblattformsegmente 4' und 5'), welche auch als Blattformlänge bezeichnet wird, aus der Summe der Längen der jeweiligen Segmente: L = L_{W} + L₁ + L_{H} + L₂ + L_{S} bzw. L' = L_{W} + L'₁ + L_{H} + L'₂ + L_{S}, wobei L_{H} die Länge des Hauptsegments 6 in Längsrichtung R bezeichnet.

Alternativ oder zusätzlich sind die austauschbaren dritten Rotorblattformsegmente 4, 4', 5, 5' in einem Bereich der Rotorblattform 1 vorgesehen, welcher zwischen etwa 20 % und 80 % der Blattformlänge L liegt. Die austauschbaren dritten Rotorblattformsegmente 4, 4', 5, 5' selbst haben vorzugsweise eine Segmentlänge L₁ L'₁, L₂ bzw. L'₂, die nicht größer ist als 20 % der Blattformlänge L.

Es ist ferner bevorzugt, dass die jeweils aneinander stoßenden Grundflächen A bzw. B, welche auch als Anschlussquerschnittsflächen bezeichnet werden, der Rotorblattformsegmente 2 bis 5 und des mindestens einen Hauptsegments 6 so ausgebildet sind eine im Wesentlichen identische und/oder einander entsprechende geometrische Form aufweisen. Die einzelnen Segmente 2 bis 6 können dadurch stetig aneinander gesetzt, entfernt bzw. ausgetauscht werden.

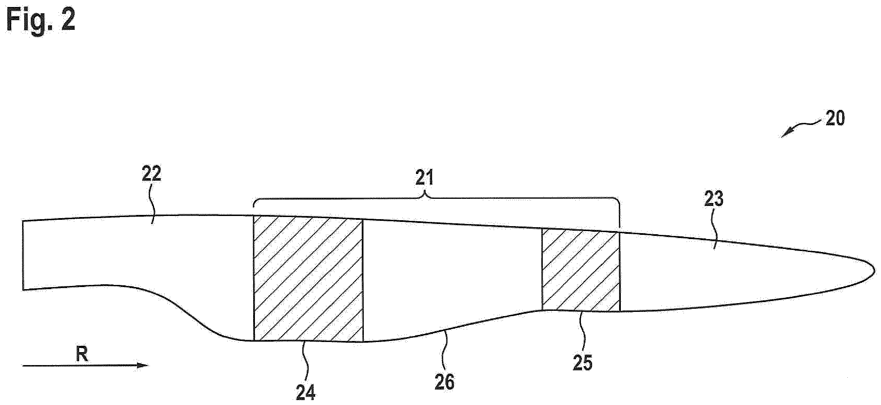

Figur 2 zeigt ein Beispiel eines mit einer Rotorblattform hergestellten Rotorblattes 20 in Frontansicht. Das Rotorblatt 20 weist eine Blattwurzel 22, eine Blattspitze 23 und einen dazwischen liegenden Blattkörper 21 auf.

Im vorliegenden Beispiel wurde das Rotorblatt 20 unter Verwendung der in Figur 1 gezeigten Rotorblattform 1 hergestellt, in dem z.B. mehrere Lagen dünner textiler Gebilde, wie etwa Gewebe, Gewirke, Gelege oder Vliese, in die Rotorblattform 1 eingelegt und anschließend mittels einer Harzinfusionstechnik mit Harz versehen werden. Alternativ können vorimprägnierte Faserlagen (sog. Prepregs) verwendet werden, bei welchen die Faserlagen bereits in Harz, insbesondere eine Lage aus Harz, eingebettet sind und nach Erwärmung und ggf. Beaufschlagung mit Unterdruck eine stoffschlüssige Verbindung eingehen. Die auf diese Weise erhaltene Form der Blattwurzel 22 und der Blattspitze 23 entspricht dabei der Negativform im ersten bzw. zweiten Rotorblattformsegment 2 bzw. 3, und die Form des Blattkörpers 21 einschließlich seiner Teilabschnitte 24 bis 26 entspricht der Negativform der zusammengesetzten dritten Rotorblattformsegmente 4, 5 und des Hauptsegments 6. Durch Austauschen der dritten Rotorblattformsegmente 4, 5 gegen dritte Rotorblattformsegmente 4`, 5` mit einer kürzeren Länge werden die Teilabschnitte 24 bzw. 25 des Rotorblattes 1 und damit die Gesamtlänge des Rotorblattes 1 entsprechend kürzer.

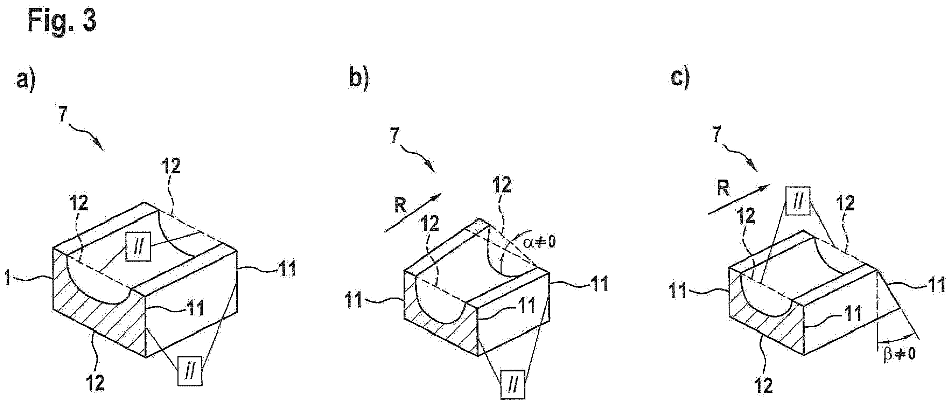

Figur 3 a) bis c) zeigt drei Beispiele von Zwischensegmenten, d.h. dritten Rotorblattformsegmenten 7, in einer perspektivischen Darstellung.

Bei dem in Figur 3 a) dargestellten Rotorblattformsegment 7 sind sowohl die Querkanten 11 als auch die Längskanten 12 der oberen und unteren Grundfläche (schraffiert) des Segments 7 parallel zu einander, was in der Figur durch mit einem Kästchen umrandete Symbole "//" angedeutet ist. Die obere und untere Grundfläche des Segments 7 sind parallel zueinander und identisch. Im vorliegenden Beispiel hat das Rotorblattformsegment 7 die Form eines Zylinders, dessen Grundfläche durch ein Rechteck, welches im Bereich einer der Längskanten 12 eine vorzugsweise konkave Wölbung aufweist, gebildet wird. Die sich zwischen der oberen und unteren Grundfläche erstreckende Wölbung stellt einen Abschnitt aus einer Negativform der herzustellenden Rotorblattschale dar.

Bei dem in Figur 3 b) dargestellten Rotorblattformsegment 7 sind dagegen nur die jeweiligen Querkanten 11 der oberen und unteren Grundfläche (schraffiert) des Segments 7 parallel zu einander, was in der Figur durch ein mit einem Kästchen umrandetes Symbol "//" angedeutet ist, wohingegen die obere und untere Grundfläche um einen Winkel □ > 0° um eine im Wesentlichen senkrecht zur Längsrichtung R der Rotorblattform bzw. in Richtung der Querkanten 11 verlaufende erste Achse gegeneinander gekippt sind. Mit in dieser Weise ausgestalteten dritten Rotorblattformsegmenten 7 kann auf einfache Weise ein sog. Twist (Verwindung) bzw. eine Krümmung des Rotorblattes in der Rotationsebene realisiert werden.

Bei dem in Figur 3 c) dargestellten Rotorblattformsegment 7 sind nur die jeweiligen Längskanten 12 der oberen und unteren Grundfläche (schraffiert) des Segments 7 parallel zu einander, was in der Figur durch ein mit einem Kästchen umrandetes Symbol "//" angedeutet ist, wohingegen die beiden Querkanten 11 der oberen und unteren Grundfläche um einen Winkel □ > 0° um eine im Wesentlichen senkrecht zur Längsrichtung R der Rotorblattform bzw. in Richtung der Längskanten 12 verlaufende zweite Achse gegeneinander gekippt sind. Mit in dieser Weise ausgestalteten dritten Rotorblattformsegmenten 7 kann auf einfache Weise eine sog. Vorbiegung bzw. eine Krümmung des Rotorblattes aus der Rotationsebene heraus realisiert werden.

Es ist auch möglich, die obere und untere Grundfläche des Rotorblattformsegments 7 sowohl wie in Figur 3 b) als auch wie in Figur 3 c) gezeigt zu kippen.

## Patentansprüche

1. Rotorblattform (1) zur Herstellung eines Rotorblattes (20) für eine Windenergieanlage, wobei das Rotorblatt (20) eine Blattwurzel (22) und eine Blattspitze (23) aufweist und sich in einer Längsrichtung (R) von der Blattwurzel (22) zur Blattspitze (23) erstreckt, mit
- einem ersten Rotorblattformsegment (2), welches zur Herstellung eines die Blattwurzel (22) aufweisenden Abschnitts des Rotorblattes (20) eingerichtet ist,
- einem zweiten Rotorblattformsegment (3), welches zur Herstellung eines die Blattspitze (23) aufweisenden Abschnitts des Rotorblattes (20) eingerichtet ist, und
- mindestens einem dritten Rotorblattformsegment (4, 4', 5, 5', 7), welches dazu eingerichtet ist, zwischen dem ersten und zweiten Rotorblattformsegment (2, 3) in die Rotorblattform (1) integriert zu werden und/oder aus der Rotorblattform (1) entfernt zu werden und dabei die Rotorblattform (1) in Längsrichtung (R) zu verlängern oder zu verkürzen, **dadurch gekennzeichnet, dass** das mindestens eine dritte Rotorblattformsegment (4', 5', 7) eine zur Längsrichtung (R) im Wesentlichen senkrecht verlaufende Querschnittsfläche aufweist, deren Form und/oder Größe bei unterschiedlichen Positionen der Querschnittfläche entlang der Längsrichtung (R) im Wesentlichen konstant ist.

2. Rotorblattform (1) nach Anspruch 1, wobei das mindestens eine dritte Rotorblattformsegment (4, 4', 5, 5', 7) in einem Bereich zwischen etwa 20 % und 80 % einer Blattformlänge (L, L') der Rotorblattform (1) in Längsrichtung (R) vorgesehen ist.

3. Rotorblattform (1) nach Anspruch 1, wobei das mindestens eine dritte Rotorblattformsegment (4, 4', 5, 5', 7) in einem Bereich der Rotorblattform (1) vorgesehen ist, welcher zur Herstellung eines im Wesentlichen zylindrischen Bereichs der Blattwurzel (22) des Rotorblattes (20) eingerichtet ist.

4. Rotorblattform (1) nach Anspruch 1 oder 2, wobei das mindestens eine dritte Rotorblattformsegment (4, 4', 5, 5', 7) in Längsrichtung (R) eine Segmentlänge (L₁, L₂, L'₁, L'₂) aufweist, welche nicht größer ist als 20 % einer Blattformlänge (L, L') der Rotorblattform (1) in Längsrichtung (R).

5. Rotorblattform (1) nach einem der vorangehenden Ansprüche, wobei das mindestens eine dritte Rotorblattformsegment (4, 4', 5, 5', 7) jeweils eine obere Grundfläche (A, B) und eine untere Grundfläche (A, B) aufweist, wobei die obere und untere Grundfläche (A, B) bezüglich Form und/oder Größe der Querschnittsfläche (A bzw. B) des dem dritten Rotorblattformsegment (4, 4', 5, 5', 7) jeweils zugewandten Endes des ersten bzw. zweiten Rotorblattformsegments (2, 3) entspricht.

6. Rotorblattform (1) nach einem der vorangehenden Ansprüche, wobei das mindestens eine dritte Rotorblattformsegment (4, 4', 5, 5', 7) jeweils eine obere Grundfläche (A, B) und eine untere Grundfläche (A, B) aufweist, wobei die obere Grundfläche gegenüber der unteren Grundfläche um eine in Längsrichtung (R) verlaufende Längsachse verdreht ist und/oder die Querschnittsfläche des mindestens einen dritten Rotorblattformsegments (4, 4', 5, 5', 7) in Längsrichtung (R) verdreht ist, wobei das mindestens eine dritte Rotorblattformsegment (4, 4', 5, 5', 7) einen in Längsrichtung (R) tordierten Zylinder darstellt.

7. Rotorblattform (1) nach einem der vorangehenden Ansprüche, wobei das mindestens eine dritte Rotorblattformsegment (4, 4', 5, 5', 7) jeweils eine obere Grundfläche (A, B) und eine untere Grundfläche (A, B) aufweist, wobei die obere Grundfläche gegenüber der unteren Grundfläche um mindestens eine senkrecht zur Längsrichtung (R) verlaufende Kippachse gekippt ist und/oder eine Längsachse des mindestens einen dritten Rotorblattformsegments (4, 4', 5, 5', 7) senkrecht zur Profiltiefe eine Krümmung aufweist, so dass ein endlicher Winkel bzw. eine Verkippung zwischen der oberen und unteren Grundfläche erhalten wird.

8. Verfahren zur Herstellung eines Rotorblattes (20) für eine Windenergieanlage, wobei das Rotorblatt (20) eine Blattwurzel (22) und eine Blattspitze (23) aufweist und sich in einer Längsrichtung (R) von der Blattwurzel (22) zur Blattspitze (23) erstreckt, mit folgenden Schritten:
- Bereitstellen einer Rotorblattform (1), die ein erstes Rotorblattformsegment (2), welches zur Herstellung eines die Blattwurzel (22) aufweisenden Abschnitts des Rotorblattes (20) eingerichtet ist, und ein zweites Rotorblattformsegment (3), welches zur Herstellung eines die Blattspitze (23) aufweisenden Abschnitts des Rotorblattes (20) eingerichtet ist, aufweist, und
- Integrieren mindestens eines dritten Rotorblattformsegments (4, 4', 5, 5', 7) in die Rotorblattform (1) zwischen dem ersten und zweiten Rotorblattformsegment (2, 3) und/oder Entfernen mindestens eines zwischen dem ersten und zweiten Rotorblattsegment (2, 3) liegenden dritten Rotorblattformsegments (4, 4', 5, 5', 7) aus der Rotorblattform (1), so dass die Rotorblattform (1) in Längsrichtung (R) verlängert oder verkürzt wird, **dadurch gekennzeichnet, dass** das mindestens eine dritte Rotorblattformsegment (4', 5', 7) eine zur Längsrichtung (R) im Wesentlichen senkrecht verlaufende Querschnittsfläche aufweist, deren Form und/oder Größe bei unterschiedlichen Positionen der Querschnittfläche entlang der Längsrichtung (R) im Wesentlichen konstant ist.

## Claims

1. A rotor blade mould (1) for the manufacture of a rotor blade (20) for a wind energy installation, wherein the rotor blade (20) comprises a blade root (22) and a blade tip (23) and wherein the rotor blade (20) extends in a longitudinal direction (R) from the blade root (22) to the blade tip (23), wherein the rotor blade mould (1) comprises:
- a first rotor blade mould segment (2) which is adapted for the manufacture of a portion of the rotor blade (20) which portion of the rotor blade (20) comprises the blade root (22),
- a second rotor blade mould segment (3) which is adapted for the manufacture of a portion of the rotor blade (20) which portion of the rotor blade (20) comprises the blade tip (23), and
- at least a third rotor blade mould segment (4, 4', 5, 5', 7) which is adapted to be integrated in the rotor blade mould (1) between the first rotor blade mould segment (2) and the second rotor blade mould segment (3), and / or to be removed from the rotor blade mould (1) and thereby to lengthen or shorten the rotor blade mould (1) in the longitudinal direction (R), **characterised in that** the at least one third rotor blade mould segment (4', 5', 7) has a cross-sectional area extending substantially perpendicular to the longitudinal direction (R), the shape and / or size of which cross-sectional area is substantially constant at different positions of the cross-sectional area along the longitudinal direction (R).

2. The rotor blade mould (1) according to claim 1, wherein the at least one third rotor blade mould segment (4, 4', 5, 5', 7) is provided in a region between about 20 % and 80 % of a blade mould length (L, L') of the rotor blade mould (1) in the longitudinal direction (R).

3. The rotor blade mould (1) according to claim 1, wherein the at least one third rotor blade mould segment (4, 4', 5, 5', 7) is provided in a region of the rotor blade mould (1) which is arranged for the manufacture of a substantially cylindrical region of the blade root (22) of the rotor blade (20).

4. The rotor blade mould (1) according to claim 1 or 2, wherein the at least one third rotor blade mould segment (4, 4', 5, 5', 7) has a segment length (L₁, L₂, L'₁, L'₂) in the longitudinal direction (R) which segment length (L₁, L₂, L'₁, L'₂) is not greater than 20 % of a blade mould length (L, L') of the rotor blade mould (1) in the longitudinal direction (R).

5. The rotor blade mould (1) according to any one of the preceding claims, wherein each of the at least one third rotor blade mould segment (4, 4', 5, 5', 7) has an upper base surface (A, B) and a lower base surface (A, B), wherein the upper and lower base surfaces (A, B) respectively correspond, in terms of shape and / or size, to the cross-sectional area (A and B, respectively) of the end of the first and second rotor blade mould segments (2, 3) which respectively face towards the third rotor blade mould segment (4, 4', 5, 5', 7).

6. The rotor blade mould (1) according to any one of the preceding claims, wherein each of the at least one third rotor blade mould segment (4, 4', 5, 5', 7) has an upper base surface (A, B) and a lower base surface (A, B), wherein the upper base surface is twisted with respect to the lower base surface about a longitudinal axis running in the longitudinal direction (R) and / or the cross-sectional area of the at least one third rotor blade mould segment (4, 4', 5, 5', 7) is twisted in the longitudinal direction (R), wherein the at least one third rotor blade mould segment (4, 4', 5, 5', 7) represents a cylinder which is twisted in the longitudinal direction (R).

7. The rotor blade mould (1) according to any one of the preceding claims, wherein each of the at least one third rotor blade mould segment (4, 4', 5, 5', 7) has an upper base surface (A, B) and a lower base surface (A, B), wherein the upper base surface is tilted with respect to the lower base surface about at least one tilt axis which extends perpendicular to the longitudinal direction (R) and / or wherein a longitudinal axis of the at least one third rotor blade mould segment (4, 4', 5, 5', 7) has a curvature perpendicular to the profile depth, so that a finite angle or a tilt is obtained between the upper and lower base surfaces.

8. A method of manufacturing a rotor blade (20) for a wind energy installation, wherein the rotor blade (20) comprises a blade root (22) and a blade tip (23) and extends in a longitudinal direction (R) from the blade root (22) to the blade tip (23), wherein the method comprises the following steps of:
- providing a rotor blade mould (1) which comprises a first rotor blade mould segment (2) which is adapted for the manufacture of a portion of the rotor blade (20) which portion of the rotor blade (20) comprises the blade root (22), and a second rotor blade mould segment (3) which is adapted for the manufacture of a portion of the rotor blade (20) which portion of the rotor blade (20) comprises the blade tip (23), and
- integrating at least a third rotor blade mould segment (4, 4', 5, 5', 7) into the rotor blade mould (1) between the first rotor blade mould segment (2) and the second rotor blade mould segment (3) and / or removing, from the rotor blade mould (1), at least a third rotor blade mould segment (4, 4', 5, 5', 7) which is located between the first rotor blade mould segment (2) and the second rotor blade mould segment (3), so that the rotor blade mould (1) is lengthened or shortened in the longitudinal direction (R),
**characterised in that** the at least one third rotor blade mould segment (4', 5', 7) has a cross-sectional area extending substantially perpendicular to the longitudinal direction (R), the shape and / or size of which cross-sectional area is substantially constant at different positions of the cross-sectional area along the longitudinal direction (R).

## Revendications

1. Moule de pale de rotor (1) pour la fabrication d'une pale de rotor (20) pour une éolienne, dans lequel la pale de rotor (20) présente un pied de pale (22) et un bout de pale (23) et s'étend dans une direction longitudinale (R) à partir du pied de pale (22) vers le bout de pale (23), avec
- un premier segment de moule de pale de rotor (2), lequel est conçu pour la fabrication d'une partie de la pale de rotor (20) présentant le pied de pale (22),
- un deuxième segment de moule de pale de rotor (3), lequel est conçu pour la fabrication d'une partie de la pale de rotor (20) présentant le bout de pale (23), et
- au moins un troisième segment de moule de pale de rotor (4, 4', 5, 5', 7), lequel est conçu pour être intégré dans le moule de pale de rotor (1) entre le premier et deuxième segment de moule de pale de rotor (2, 3) et/ou pour être retiré du moule de pale de rotor (1) et ce faisant pour allonger ou pour raccourcir le moule de pale de rotor (1) dans la direction longitudinale (R), **caractérisé en ce que** le au moins un troisième segment de moule de pale de rotor (4', 5', 7) présente une surface de section transversale s'étendant sensiblement perpendiculairement à la direction longitudinale (R), dont la forme et/ou taille est sensiblement constante le long de la direction longitudinale (R) pour différentes positions de la surface de section transversale.

2. Moule de pale de rotor (1) selon la revendication 1, dans lequel le au moins un troisième segment de moule de pale de rotor (4, 4', 5, 5', 7) est prévu dans une zone comprise entre sensiblement 20 % et 80 % d'une longueur de pale de rotor (L, L') du moule de pale de rotor (1) dans la direction longitudinale (R).

3. Moule de pale de rotor (1) selon la revendication 1, dans lequel le au moins un troisième segment de moule de pale de rotor (4, 4', 5, 5', 7) est prévu dans une zone du moule de pale de rotor (1), laquelle est conçue pour la fabrication d'une zone sensiblement cylindrique du pied de pale (22) de la pale de rotor (20).

4. Moule de pale de rotor (1) selon la revendication 1 ou 2, dans lequel le au moins un troisième segment de moule de pale de rotor (4, 4', 5, 5', 7) présente dans la direction longitudinale (R) une longueur de segment (L₁, L₂, L'₁, L'₂), laquelle n'est pas supérieure à 20 % d'une longueur de moule de pale (L, L') du moule de pale de rotor (1) dans la direction longitudinale (R).

5. Moule de pale de rotor (1) selon l'une quelconque des revendications précédentes, dans lequel le au moins un troisième segment de moule de pale de rotor (4, 4', 5, 5', 7) présente respectivement une surface de base supérieure (A, B) et une surface de base inférieure (A, B), dans lequel la surface de base supérieure et inférieure (A, B) en ce qui concerne la forme et/ou taille correspond à la surface de section transversale (A ou B) de l'extrémité du premier ou deuxième segment de moule de pale de rotor (2, 3) respectivement tournée vers le troisième segment de moule de pale de rotor (4, 4', 5, 5', 7).

6. Moule de pale de rotor (1) selon l'une quelconque des revendications précédentes, dans lequel le au moins un troisième segment de moule de pale de rotor (4, 4', 5, 5', 7) présente respectivement une surface de base supérieure (A, B) et une surface de base inférieure (A, B), dans lequel la surface de base supérieure est amenée en rotation par rapport à la surface de base inférieure autour d'un axe longitudinal s'étendant dans la direction longitudinale (R) et/ou la surface de section transversale du au moins un troisième segment de moule de pale de rotor (4, 4', 5, 5', 7) est amenée en rotation dans la direction longitudinale (R), dans lequel le au moins un troisième segment de moule de pale de rotor (4, 4', 5, 5', 7) représente un cylindre tordu dans la direction longitudinale (R).

7. Moule de pale de rotor (1) selon l'une quelconque des revendications précédentes, dans lequel le au moins un troisième segment de moule de pale de rotor (4, 4', 5, 5', 7) présente respectivement une surface de base supérieure (A, B) et une surface de base inférieure (A, B), dans lequel la surface de base supérieure est basculée par rapport à la surface de base inférieure autour d'au moins un axe de basculement s'étendant perpendiculairement à la direction longitudinale (R) et/ou présente un axe longitudinal du au moins un troisième segment de moule de pale de rotor (4, 4', 5, 5', 7) perpendiculaire à la profondeur de profil d'une courbure, de sorte qu'un angle fini ou un basculement entre la surface de base supérieure et inférieure est obtenu.

8. Procédé pour la fabrication d'une pale de rotor (20) pour une éolienne, dans lequel la pale de rotor (20) présente un pied de pale (22) et un bout de pale (23) et s'étend dans une direction longitudinale (R) à partir du bout de pale (23) vers le pied de pale (22), avec les étapes suivantes :
- la fourniture d'un moule de pale de rotor (1), qui présente un premier segment de moule de pale de rotor (2), lequel est conçu pour la fabrication d'une partie de la pale de rotor (20) présentant le pied de pale (22), et un deuxième segment de moule de pale de rotor (3), lequel est conçu pour la fabrication d'une partie de la pale de rotor (20) présentant le bout de pale (23), et
- l'intégration d'au moins un troisième segment de moule de pale de rotor (4, 4', 5, 5', 7) dans le moule de pale de rotor (1) entre le premier et deuxième segment de moule de pale de rotor (2, 3), et/ou le retrait d'au moins un troisième segment de moule de pale de rotor (4, 4', 5, 5', 7) situé entre le premier et deuxième segment de moule de pale de rotor (2, 3) du moule de pale de rotor (1), de sorte que le moule de pale de rotor (1) est allongé ou raccourci dans la direction longitudinale (R), **caractérisé en ce que** le au moins un troisième segment de moule de pale de rotor (4', 5', 7) présente une surface de section transversale s'étendant sensiblement perpendiculairement à la direction longitudinale (R), dont la forme et/ou taille est sensiblement constante le long de la direction longitudinale (R) pour différentes positions de la surface de section transversale.
